# FASCICULE DE BREVET EUROPEEN

(11) **EP 1 352 400 B1**
(45) Date de publication et mention de la délivrance du brevet: **22.03.2006**
(21) Numéro de dépôt: 02711975.9
(22) Date de dépôt: 16.01.2002
(51) Int. Cl.: G21F 9/00, B05B 15/04

(54) **PROCEDE ET DISPOSITIF DE DECONTAMINATION RADIOACTIVE D'UNE SURFACE SITUEE A L'INTERIEUR D'UN CORPS CREUX**
VERFAHREN UND ANLAGE ZUR RADIOAKTIVEN DEKONTAMINATION DER INNEREN OBERFLÄCHE EINES HOHLKÖRPERS
METHOD AND DEVICE FOR RADIOACTIVE DECONTAMINATION OF A SURFACE LOCATED INSIDE AN HOLLOW BODY

(30) Priorité: 17.01.2001 FR 0100614
(43) Date de publication de la demande: 15.10.2003
(73) Titulaire: Société de Maintenance Nucleaire "SOMANU", 92400 Courbevoie (FR)
(72) Inventeur: BERNARD, Alain, F-59680 Ferrière la Grande (FR)
(74) Mandataire: Bouget, Lucien
(86) Numéro de dépôt international: PCT/FR2002/000165
(87) Numéro de publication internationale: WO 2002/058076

(56) Documents cités:
- EP-A- 0 023 820
- EP-A- 0 037 190
- WO-A-91/18712
- DE-A- 4 306 631
- FR-A- 1 444 128
- FR-A- 2 539 911
- FR-A- 2 541 812
- FR-A- 2 646 275
- FR-A- 2 705 825
- GB-A- 2 319 259

## Description

L'invention concerne un procédé et un dispositif de décontamination radioactive d'une surface, notamment d'une surface métallique, située à l'intérieur d'un corps creux.

Dans les réacteurs nucléaires, on utilise des circuits ou composants venant en contact avec des radio-éléments, par exemple véhiculés par un fluide d'échange, pendant le fonctionnement du réacteur nucléaire.

Par exemple, les réacteurs nucléaires refroidis par de l'eau sous pression comportent un circuit primaire dans lequel de l'eau de refroidissement sous pression du réacteur assurant le refroidissement du combustible du coeur du réacteur est mise en circulation pour venir en contact successivement avec les assemblages de combustible du coeur, à l'intérieur de la cuve du réacteur nucléaire et avec des tubes d'échange de chaleur de générateur de vapeur. Lors de la circulation dans le circuit primaire, l'eau de refroidissement sous pression se charge en radio-éléments qui se déposent ensuite, dans certaines parties au moins du circuit primaire.

En particulier, des substances telles que des oxydes métalliques renfermant des radio-éléments se déposent sur la surface intérieure de canalisations primaires reliant entre eux les composants primaires du réacteur et sur des surfaces de parois internes ou de composants de la cuve ou des générateurs de vapeur du réacteur nucléaire.

Lorsqu'il est nécessaire d'intervenir au voisinage d'un composant, sur une surface contaminée du circuit primaire, par exemple pour effectuer un contrôle, une réparation ou un remplacement du composant, le personnel chargé de l'intervention doit être protégé contre les rayonnements ionisants provenant des surfaces contaminées. On doit alors utiliser des protections biologiques coûteuses dont l'installation peut être longue. Les travaux effectués en zones soumises aux rayonnements nécessitent le port de tenues spéciales par le personnel chargé de l'intervention ou l'utilisation de matériels automatiques commandés à distance.

Dans tous les cas, le coût et la durée des interventions sont accrues.

Dans le cas d'interventions sur dés composants ou tuyauteries contaminées, de démontage ou de démantèlement de composants, ou même d'opérations de maintenance à intervalles réguliers pour éliminer des substances radioactives déposées, on a proposé d'utiliser des méthodes de décontamination par mise en contact des surfaces contaminées avec une solution d'attaque chimique, par exemple une solution d'acide nitrique renfermant du permanganate de potassium comme décrit dans le FR-2.600.203.

Généralement, les surfaces contaminées par des substances renfermant des radio-éléments sont les surfaces internes de composants ayant la forme de corps creux tels que la cuve du réacteur ou la boîte à eau d'un générateur de vapeur, ou de tuyauteries, par exemple les tuyauteries primaires de grand diamètre ou encore des surfaces de composants situés à l'intérieur d'un corps creux tel qu'une cuve ou un corps de pompe.

La solution d'attaque chimique est alors introduite dans le corps creux et mise en contact pendant un temps suffisant avec les substances fixées sur la surface contaminée ou encore mise en circulation au contact de ces substances, de manière que les substances se retrouvent à l'état dissous dans la solution d'attaque qui est soit évacuée et éliminée à l'issue du traitement, soit renouvelée à l'intérieur du corps creux, par exemple en la recyclant après régénération.

Ces opérations nécessitent généralement une longue durée d'exécution pour que la décontamination soit suffisamment complète et efficace.

Dans certains cas, la décontamination d'éléments du circuit primaire qui sont démontés ou découpés, tels que des tronçons ou coudes de canalisations ou encore des parties de pompes primaires de mise en circulation de l'eau de refroidissement tel qu'une roue de pompe est réalisée à l'intérieur d'une cuve de nettoyage dans laquelle on introduit le composant à décontaminer et une solution d'attaque chimique qui peut être maintenue au contact du composant pendant un temps suffisant pour réaliser la décontamination puis évacuée ou mise en circulation avec, éventuellement, un recyclage et une régénération de la solution chimique.

Dans le cas d'une opération de remplacement d'un ou plusieurs générateurs de vapeur d'un réacteur nucléaire à eau sous pression, il est nécessaire de tronçonner les tuyauteries primaires de raccordement du générateur de vapeur, puis de souder les tubulures du générateur de vapeur de remplacement sur les tuyauteries découpées et usinées, laissées en attente. Préalablement à ces opérations, il est nécessaire de décontaminer soigneusement les surfaces internes de certaines des tuyauteries qui ne sont généralement accessibles que par une extrémité.

De telles opérations de remplacement qui nécessitent la mise en oeuvre de nombreux moyens et l'exécution de nombreuses tâches successives, suivant une organisation précise, sont d'autant plus satisfaisantes qu'elles s'accompagnent d'une durée d'immobilisation du réacteur nucléaire la plus courte possible.

Il est donc très souhaitable de raccourcir au maximum le temps d'exécution des différentes tâches et en particulier de la décontamination.

De manière générale, il est avantageux, pour toute application, de disposer de procédés rapides et efficaces pour effectuer la décontamination de surfaces ou composants à l'intérieur de corps creux, tels que des tuyauteries, des cuves, des boîtes à eau de réacteur nucléaire ou des cuves de nettoyage, en utilisant des moyens pratiques à mettre en oeuvre et habituellement disponibles sur le site d'un réacteur nucléaire.

Le but de l'invention est donc de proposer un procédé de décontamination d'une surface, notamment métallique, située à l'intérieur d'un corps creux, sur laquelle est fixée au moins une substance renfermant au moins un radio-élément par mise en contact de la substance radio-active fixée sur la surface avec une solution d'attaque chimique à l'intérieur d'un corps creux, permettant d'effectuer la décontamination d'une manière efficace et rapide avec des moyens simples, pratiques à mettre en oeuvre et facilement disponibles sur le site d'une centrale nucléaire.

Dans ce but, on procède selon la partie caractérisante de la revendication 1.

L'invention est également relative à un dispositif de décontamination pour la mise en oeuvre du procédé de l'invention, selon la revendication 8.

Afin de bien faire comprendre l'invention, on va décrire à titre d'exemple en se référant aux figures jointes en annexe, plusieurs modes de réalisation d'un procédé et d'un dispositif suivant l'invention utilisés pour décontaminer des tuyauteries ou composants d'un circuit primaire d'un réacteur nucléaire à eau sous pression.
La figure 1 est une vue schématique d'une installation de nettoyage permettant de mettre en oeuvre le procédé de l'invention.
La figure 2 est une vue en coupe axiale d'un coude d'une tuyauterie primaire du réacteur nucléaire, pendant une opération de décontamination par le procédé de l'invention et suivant une première variante de réalisation.
La figure 3 est une vue en coupe axiale d'un coude d'une canalisation primaire pendant une opération de décontamination suivant le procédé de l'invention et suivant une seconde variante de réalisation.
La figure 4 est une vue schématique en élévation et en coupe partielle d'une installation de décontamination d'une roue de pompe primaire par le procédé de l'invention.

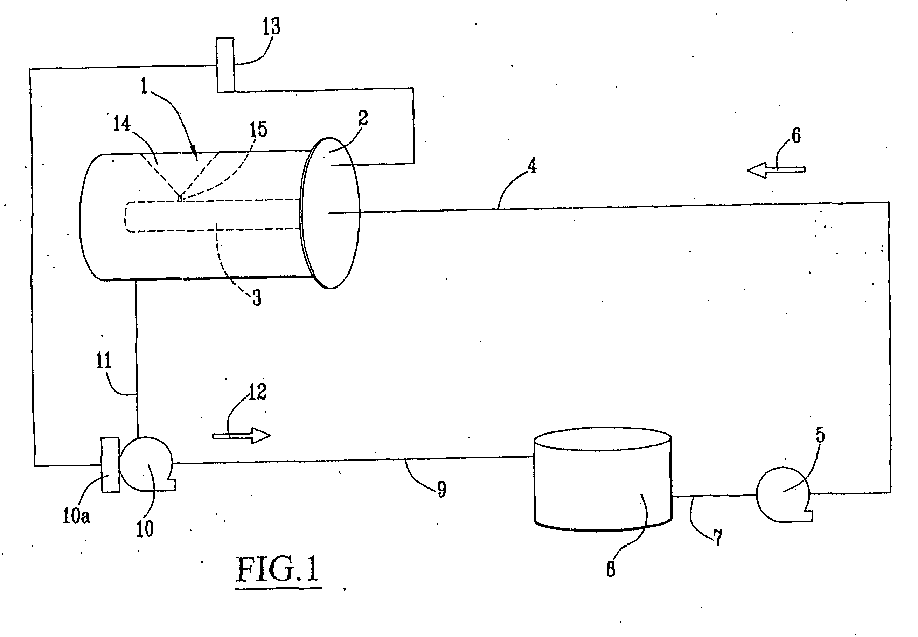

Sur la figure 1, on a représenté un corps creux 1 à l'intérieur duquel on réalise la décontamination d'au moins une surface qui peut être par exemple la surface intérieure du corps creux lui-même. Le corps creux 1 peut être par exemple un tronçon de canalisation ou un récipient tel qu'une cuve dont on doit décontaminer la surface intérieure avant une intervention.

La surface à décontaminer à l'intérieur du corps creux 1 peut être également la surface d'un composant difficilement démontable ou indémontable, laissé en place à l'intérieur du corps creux 1. Le corps creux 1 comporte une extrémité fermée, ou fond, et une extrémité ouverte sur laquelle est rapportée une plaque ou tape de fermeture 2 qui peut être fixée de manière étanche sur l'extrémité ouverte du corps creux 1. A l'intérieur du corps creux est disposée, par exemple suivant une direction axiale du corps creux, une rampe d'aspersion 3 comportant une pluralité de buses dirigées vers la surface à nettoyer, par exemple la surface intérieure du corps creux 1.

La rampe 3 est alimentée en fluide de nettoyage et de décontamination sous pression, par une tuyauterie 4 reliée à la partie de sortie d'une pompe haute pression 5, de manière qu'un fluide de nettoyage sous pression circule dans la canalisation 4 suivant le sens indiqué par la flèche 6.

La partie d'entrée de la pompe haute pression 5 est reliée par une conduite de liaison 7 à un réservoir 8 renfermant du fluide de décontamination.

Le réservoir 8 est relié, à sa partie inférieure, à la conduite 7 et, dans sa partie supérieure, à une conduite 9 de liaison du réservoir à la partie de sortie d'une pompe de reprise 10 dont la partie d'entrée est reliée par une conduite de liaison 11 au volume interne du corps creux 1, au voisinage d'un point bas du corps creux 1. La pompe 10 qui peut être par exemple une pompe à membrane permet de récupérer du fluide de décontamination dans le fond du corps creux 1 et de le renvoyer dans le réservoir 8, pour permettre son recyclage et sa réutilisation pour la décontamination du corps creux, par l'intermédiaire de la pompe haute pression 5.

A l'intérieur du réservoir 8, on peut également réaliser la régénération du fluide de décontamination qui est généralement une solution chimique d'attaque.

Dans sa partie supérieure, la tape d'obturation 2 comporte un ajutage au niveau duquel un manomètre tel qu'un manomètre à colonne d'eau 13 est relié par une conduite au volume intérieur du corps creux 1. Le manomètre 13 permet de mesurer la pression à l'intérieur du corps creux 1 et de fournir un signal de pression à un moyen de commande 10a de la pompe de reprise 10 pour régler le débit de la pompe de reprise 10 sur celui de la pompe haute pression 5.

La pompe de reprise qui est par exemple une pompe à membrane peut fonctionner à sec sans dommage, de sorte qu'on peut ajuster à volonté le débit de la pompe de reprise sur celui de la pompe d'injection à haute pression 5.

La pompe d'injection à haute pression 5 fait parvenir à la rampe 3 un fluide à une pression supérieure à la pression atmosphérique et comprise, par exemple, entre 2 et 400 bars, de manière que la rampe 3 qui comporte des buses 15 forme des jets sous pression 14 dirigés chacun vers une zone de la surface à nettoyer à l'intérieur du corps creux 1.

Le fluide de décontamination est un réactif chimique qui peut être sous forme liquide, gélifiée ou gazeuse.

Les réactifs chimiques peuvent être acides, basiques ou neutres, oxydants ou réducteurs et peuvent être utilisés à température ambiante ou à une température supérieure à la température ambiante. Les réactifs peuvent être dosés et régénérés à l'intérieur du réservoir de stockage 8 ; le réservoir 8 peut comporter des moyens de chauffage, par exemple à résistance, pour porter le fluide de décontamination à une température supérieure à la température ambiante permettant d'augmenter la réactivité du fluide.

Dans le cas où l'on utilise un fluide de décontamination constitué par une solution chimique liquide, on évacue le liquide à partir d'un point bas du corps creux 1, soit en utilisant une pompe de reprise telle que la pompe 10 représentée sur la figure 1, soit par écoulement gravitaire, le réservoir de récupération étant disposé à un niveau inférieur au niveau du corps creux 1.

Dans le cas d'un fluide de décontamination constitué par des réactifs sous forme gélifiée, le gel réactif est pulvérisé dans le corps creux par les buses 15 de la rampe 3, sous la forme de jets 14, puis on effectue ensuite le rinçage par pulvérisation, généralement à l'eau de la surface décontaminée et on évacue le liquide de rinçage par pompage.

La pulvérisation des réactifs et produit de rinçage sous la forme de jets sous pression permet de décoller des substances contaminantes renfermant des radio-éléments de la surface à nettoyer, par effet mécanique du jet et par effet chimique d'attaque par le réactif.

Suivant le type de réactif utilisé, on peut utiliser des pressions d'injection dans la rampe, grâce à la pompe d'injection 5, qui se situent à un niveau voulu à l'intérieur de l'intervalle de pressions indiqué ci-dessus.

Pour démarrer une opération de décontamination, on réalise, à l'intérieur du récipient de stockage 8, la préparation d'une solution chimique dont on ajuste la concentration en réactif. La solution est homogénéisée et éventuellement portée à la température voulue pour obtenir la meilleure réactivité au contact de la surface à décontaminer.

Pendant la décontamination, la solution recyclée peut être régénérée à l'intérieur du réservoir 8.

La liaison entre le réservoir de stockage 8 et le corps creux 1 dans lequel on effectue la décontamination peut être obtenue par des tuyauteries souples ou rigides ou par des lignes constituées de tronçons de canalisations souples et de tronçons rigides.

La rampe de pulvérisation 3 peut être constituée par un élément profilé creux dont la section présente une forme quelconque (par exemple ronde, carrée ou hexagonale). La forme de la rampe est adaptée à la géométrie de la surface à décontaminer à l'intérieur du corps creux. La rampe est en un matériau ayant une bonne résistance au réactif utilisé pour la décontamination et à la pression d'injection.

Les buses de pulvérisation 15 de la rampe 3 peuvent être prévues de manière que les jets 14 recouvrent totalement la surface à décontaminer, les jets 14 issus des buses 15 pouvant se chevaucher, ce qui ne nuit en rien l'efficacité de la décontamination.

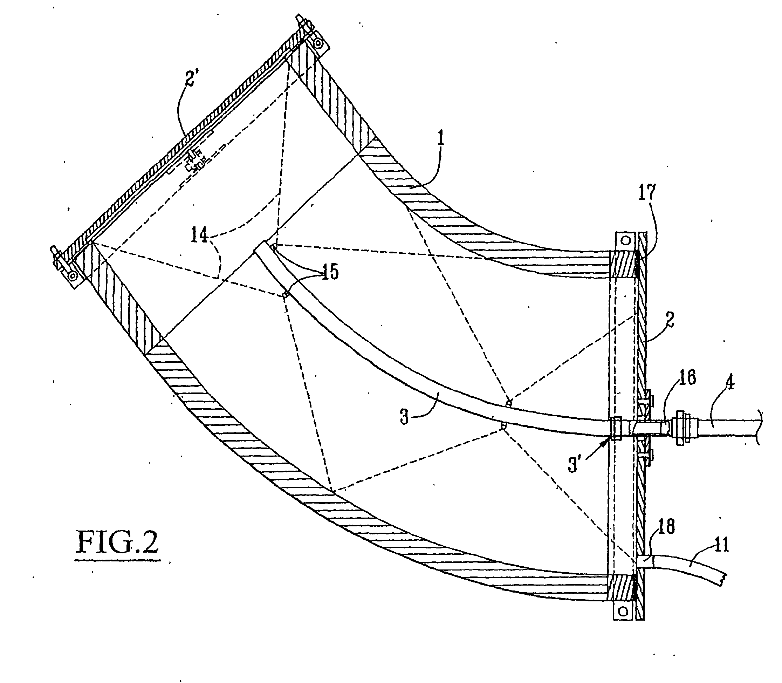

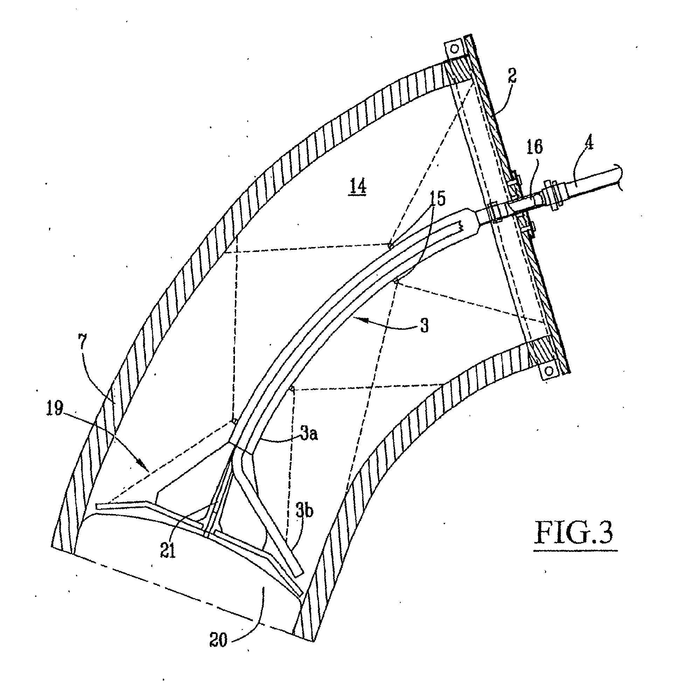

On va maintenant décrire, en se reportant aux figures 2 et 3, deux cas particuliers de nettoyage de la surface interne d'un corps creux constitué par un coude d'une canalisation primaire.

Les éléments correspondants sur la figure 1 et sur les figures 2 et 3 portent les mêmes repères.

Dans le cas du mode de réalisation selon une première variante, représenté sur la figure 2, le corps creux 1 constitué par un coude de canalisation primaire qui a été découpé et usiné à ses extrémités est fermé à une première extrémité par une tape d'obturation 2 qui est traversée à sa partie centrale par une ouverture dans laquelle est monté un ajutage 16 de raccordement de la rampe 3 à la tuyauterie 4 d'alimentation de la rampe 3 en liquide de décontamination sous pression. La rampe 3, réalisée sous forme tubulaire est reliée à une première extrémité d'arrivée de fluide par un raccord 3', à une partie d'extrémité de l'ajutage 16, à l'intérieur du corps creux 1. La partie d'extrémité du coude de canalisation primaire constituant le corps creux 1, opposée à l'extrémité fermée par la tape 2 est obturée par une tape d'obturation 2', analogue à la tape 2, et ne comportant pas d'ouverture centrale de passage d'un ajutage.

Les tapes 2 et 2' sont rapportées contre une surface usinée de la partie d'extrémité correspondante du coude 1 et serrées par l'intermédiaire d'un moyen mécanique, par exemple à vis et écrou, avec interposition d'un joint d'étanchéité tel que le joint 17 intercalé entre la tape 2 et la première extrémité du coude 1.

Un second ajutage 18 traverse la tape 2 dans une zone située à la partie inférieure du corps creux 1.

Lorsque la rampe 3 est alimentée en fluide sous pression, les buses 15 forment des jets 14 qui recouvrent chacun une partie de la surface intérieure du coude 1.

La rampe 3 peut présenter une courbure analogue à la courbure du coude 1, de manière telle que l'axe de la rampe soit confondu avec l'axe courbe du coude 1. Les buses 15 sont disposées suivant la longueur de la rampe 3 et orientées de manière que les jets 14 puissent recouvrir l'ensemble de la surface intérieure du coude 1, les jets voisins pouvant présenter en outre des zones de recouvrement.

Les jets sous pression qui viennent frapper la surface intérieure du corps creux 1 produisent le décollement de substances radioactives, c'est-à-dire de substances renfermant au moins un radio-élément, déposées sur la surface intérieure du coude 1 par effet mécanique et par effet chimique d'attaque.

Une partie des dépôts de substances radioactives peut être également dissoute dans le réactif d'attaque.

Le réactif d'attaque renfermant les particules arrachées et les substances dissoutes se rassemble à la partie inférieure du corps creux 1 pour être évacué par l'intermédiaire de l'ajutage 18 et de la conduite d'évacuation 11 reliée éventuellement à une pompe de reprise.

Dans le cas de la seconde variante de réalisation du nettoyage d'un coude de canalisation primaire 1, le coude n'étant accessible que par une ouverture d'entrée qui a été usinée, la tape 2 est fixée sur l'ouverture d'entrée et la rampe 3 reliée à l'ajutage 16 traversant là tape d'obturation 2 à sa partie centrale. La rampe 3 disposée suivant l'axe du coude 1 comporte un tube externe 3a sur lequel sont fixées les buses d'aspersion 15 et un tube interne 3b coaxial au tube 3a (figure 3).

Le tube externe 3a communique, à une première extrémité ouverte, avec un collecteur de fluide de décontamination alimenté par l'ajutage 16 et la canalisation 4 et porte, à son extrémité opposée fermée, un ensemble 19 d'obturation de la seconde extrémité du coude 1.

L'ensemble d'obturation 19 comporte un obturateur gonflable 20 alimenté en gaz sous pression, depuis l'extérieur du coude 1, par une conduite 21 disposée le long de la rampe 3.

Le tube intérieur 3b de la rampe 3 comporte une première partie d'extrémité reliée à une conduite d'évacuation au niveau de la tape d'obturation 2 et une seconde extrémité ouverte placée de manière adjacente à la surface supérieure du dispositif d'obturation 19 qui comporte un ensemble rigide de support de l'obturateur gonflable 20.

Pour mettre en place la rampe 3 à l'intérieur d'un coude de tuyauterie primaire accessible par une première extrémité ouverte, on engage, avec l'obturateur 20 à l'état dégonflé, le dispositif d'obturation 19 que l'on gonfle dès qu'il est en place. On engage ensuite la rampe 3 à ('intérieur du coude jusqu'à mettre en appui la tape d'obturation 2 sur la première extrémité du coude 1.

On fixe la tape d'obturation par des moyens mécaniques sur la première extrémité du coude 1 et on gonfle l'obturateur gonflable 20 jusqu'à fermer de manière étanche la seconde extrémité du coude 1, le nettoyage de la surface intérieure du coude étant réalisé par la rampe entre la première extrémité fermée par la tape 2 et la seconde extrémité du coude fermée par l'obturateur gonflable 20.

Le fluide de décontamination envoyé dans l'espace annulaire périphérique de la rampe 3 entre les tubes 3a et 3b est distribué par les buses 15, sous la forme de jets de nettoyage sous pression 14 recouvrant l'ensemble de la surface du coude 1. Le fluide de décontamination contenant des particules de substances radioactives arrachées à la surface intérieure du coude 1 ou des substances dissoutes est récupéré par le tube 3b relié à une installation d'aspiration telle qu'une pompe de reprise.

Les dispositifs représentés sur les figures 2 et 3 peuvent être mis en oeuvre aussi bien pour effectuer la décontamination de coudes, comme décrit ci-dessus, que de tronçons droits de canalisations primaires.

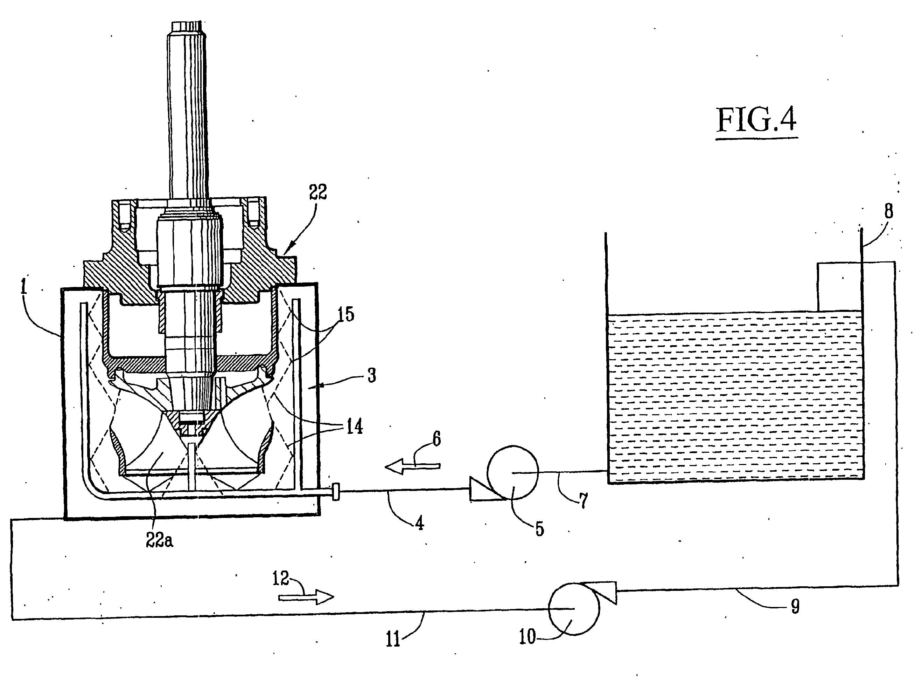

Sur la figure 4, on a représenté une installation de décontamination utilisée pour décontaminer la partie hydraulique d'une pompe primaire comportant un ensemble démontable 22 constitué de la roue de pompe 22a, d'un arbre d'entraînement de la roue de pompe et d'une barrière thermique recevant des joints d'étanchéité.

La roue de pompe 22a et l'enveloppe de barrière thermique qui est en contact avec l'eau primaire du réacteur nucléaire pendant le fonctionnement du réacteur peuvent être recouvertes par des substances radioactives telles que des oxydes qui se déposent sur la roue de pompe et une partie du support pendant le fonctionnement du réacteur nucléaire.

L'hydraulique de pompe doit être révisée et, pour intervenir, on doit la décontaminer après un certain temps de fonctionnement sur le circuit primaire du réacteur nucléaire. Cette décontamination par le procédé de l'invention ne peut pas être mis en oeuvre à l'intérieur du corps de pompe, du fait qu'il n'est pas possible d'introduire une ou plusieurs rampes de pulvérisation dans le corps de pompe.

Sur la figure 4, on a représenté l'installation permettant de décontaminer l'hydraulique de pompe; les éléments présentant des fonctions analogues dans le cas du dispositif représenté sur la figure 4 et dans le cas du dispositif des figures 1 à 3 sont désignés par les mêmes repères.

L'installation comporte en particulier un corps creux 1 constitué par une cuve dans laquelle est placé un ensemble de rampes d'aspersion 3 dont les buses 15 sont dirigées vers la partie centrale de la cuve de nettoyage 1 suivant laquelle est placé l'axe de l'arbre de pompe.

La cuve 1 comporte un bord supérieur sur lequel peut venir reposer la barrière thermique 22, de manière telle que la partie de la pompe à nettoyer comportant la roue de pompe 22a et l'enveloppe de la barrière thermique soit dirigée vers les buses 15 de la rampe 3.

On peut utiliser un ensemble de rampes 3 comportant une pluralité d'éléments de rampe placés dans des dispositions parallèles à l'axe de rotation de la roue de pompe, autour de la roue de pompe et de l'enveloppe de barrière thermique.

On peut également utiliser uniquement une ou deux rampes d'un ensemble de rampes 3 et faire tourner la roue de pompe et la barrière thermique autour de l'axe de la roue de pompe, pendant le nettoyage.

L'installation de décontamination comporte une capacité de stockage de réactif de décontamination 8, une pompe haute pression 5 permettant d'injecter du fluide de décontamination sous pression de la capacité 8 dans l'ensemble de rampes 3 et une pompe de reprise 10 reliée à une partie inférieure de vidange de la cuve 1 par l'intermédiaire d'une tuyauterie 11 et à la capacité de stockage par une conduite de retour 9.

L'installation fonctionne de la même manière que les installations qui ont été décrites précédemment.

Le fluide de décontamination sous pression est envoyé par la pompe haute pression 5 dans l'ensemble de rampes 3, comme représenté par la flèche 6, de sorte que les jets 14 formés par les rampes de l'ensemble de rampes viennent en contact avec l'ensemble des surfaces externes de la roue de pompe 22a et de l'enveloppe de barrière thermique. Les jets 14 sous pression produisent, par effet mécanique, le décollement de particules de substances radioactives des différentes parties de la surface externe de la roue de pompe et la dissolution de substances radioactives par dissolution chimique.

Le fluide de décontamination récupéré dans le fond de la cuve de nettoyage 1 par la conduite d'évacuation 11 renferme des particules de substances radioactives et certaines espèces radioactives sous forme dissoute dans les réactifs du fluide de décontamination.

Le fluide de décontamination récupéré dans le fond de la cuve de nettoyage 1 peut être filtré avant d'être réintroduit dans le réservoir de stockage 8.

Les rampes de l'ensemble de rampes d'aspersion 3 sont disposées de manière qu'on puisse atteindre toutes les parties de la surface extérieure de la roue de pompe et de l'enveloppe de barrière thermique.

Bien entendu, une installation telle que représentée sur la figure 4 peut être adaptée pour réaliser la décontamination de différents types de composants primaires d'un réacteur nucléaire.

Il est possible soit de changer les rampes pour les adapter à la forme du composant à décontaminer, soit de changer la cuve de nettoyage 1 dans son ensemble.

Les principaux avantages du procédé et du dispositif suivant l'invention sont les suivantes :
- L'efficacité de la décontamination est améliorée du fait de la combinaison des effets mécaniques et chimiques. Les réactifs chimiques permettent de fragiliser les couches de substances radioactives, par exemple les couches d'oxydes, par mise en solution d'éléments constitutifs de ces couches. L'effet mécanique des jets sous pression permet d'arracher les couches qui sont fragilisées par l'attaque chimique. On peut ainsi rendre accessibles à la solution chimique d'attaque les couches d'oxydes adjacentes.
- Le renouvellement permanent de la solution chimique de décontamination au contact de la surface à décontaminer permet d'améliorer l'efficacité de la décontamination. L'efficacité de la décontamination est en effet liée à l'épaisseur de la couche de diffusion de la solution d'attaque et donc à la vitesse du fluide.
- On diminue le volume des solutions utilisées et donc des effluents produits lors du nettoyage. Le volume de solution d'attaque nécessaire est celui qui suffit à faire fonctionner la pompe à haute pression sans désamorçage ou cavitation. Ce volume est généralement beaucoup plus faible que le volume nécessaire au remplissage complet du corps creux dans lequel se trouve la surface à décontaminer.
- La partie extérieure d'un corps creux à décontaminer sur sa surface interne reste parfaitement exempte de radio-élément provenant de la surface à décontaminer, du fait de l'absence de contact entre les solutions chimiques de décontamination et la surface extérieure du corps creux:
- La manutention et la mise en place des outillages sont plus faciles et nécessitent des moyens de levage réduits.
- Il est facile de transformer une installation de décontamination de type classique comportant un circuit de mise en circulation de liquide réactif chimique, par des transformations de faible importance. Il suffit en général d'installer une pompe haute pression pour assurer la pulvérisation du liquide réactif chimique et éventuellement d'une pompe de reprise pour l'évacuation du fluide d'un corps creux dans lequel on réalise la décontamination.
- II n'y a pas de risque de débordement des solutions du fait de la fermeture du corps creux qui peut être assurée de manière étanche.
- Le personnel chargé de la décontamination subit de faibles débits de dose, du fait de la rapidité du montage des outillages nécessaires pour la décontamination.
- L'étanchéité de la tape de fermeture qui est mise en place sur le corps creux peut être réalisée de manière simple.

L'invention ne se limite pas aux modes de réalisation qui ont été décrits.

Dans certains cas, on peut utiliser des rampes télescopiques permettant d'atteindre des parties de la surface à décontaminer éloignées de l'ouverture d'entrée du corps creux, des rampes munies d'une tête rotative à leur extrémité ou des dispositifs comportant des bras et des buses tournant par réaction du fluide sous pression éjecté par les buses. On peut ainsi réaliser la pulvérisation des réactifs chimiques de manière tangentielle par rapport à la surface à décontaminer.

Il est possible de prévoir des rampes amovibles pour réaliser la décontamination de composants de formes différentes.

Dans le cas où le corps creux ne présente pas une symétrie autour d'un axe, on peut utiliser plusieurs rampes montées sur une même tape de fermeture pour permettre la pulvérisation de jets sur des surfaces de géométrie complexe du composant à décontaminer.

De manière générale, l'invention peut s'appliquer dans de nombreux secteurs de l'industrie nucléaire.

## Revendications

1. Procédé de décontamination d'une surface d'un composant (7, 22), notamment métallique, utilisé dans le domaine de l'industrie nucléaire sur laquelle est fixée au moins une substance renfermant au moins un élément radioactif, par mise en contact de la substance fixée sur la surface avec une solution d'attaque chimique, à l'intérieur d'un corps creux (1, 7), **caractérisé par le fait qu'**on met la solution d'attaque chimique à l'état liquide en contact avec la substance fixée sur la surface à décontaminer, sous la forme d'une pluralité de jets sous pression (14) produits par une pluralité de buses (15) solidaires d'au moins une rampe (3) montée dans une position fixe par rapport à la surface à décontaminer à l'intérieur du corps creux (1, 7) et ayant une forme adaptée à la géométrie de la surface à décontaminer, de manière que les jets (14) recouvrent totalement la surface à décontaminer et effectuent le décollement de la substance radioactive de la surface à décontaminer, par effet mécanique de jet et par effet chimique d'attaque, avec un renouvellement permanent de la solution d'attaque chimique liquide au contact de la surface à décontaminer et qu'on évacue, à l'extérieur du corps creux, la solution chimique, après sa mise en contact avec la substance radioactive et la substance radioactive sous l'une au moins des formes suivantes : phase dissoute dans la solution d'attaque chimique, particules arrachées à la surface métallique.

2. Procédé suivant la revendication 1, **caractérisé par le fait que** la surface à décontaminer est une surface interne du composant (7) constituant le corps creux (7), les jets sous pression couvrant constamment l'ensemble de la surface interne du corps creux (7) à décontaminer, avec un recouvrement éventuel entre les jets (14).

3. Procédé suivant la revendication 2, **caractérisé par le fait que** la surface à décontaminer est la surface intérieure d'un tronçon de canalisation (7) ou d'un coude du circuit primaire d'un réacteur nucléaire à eau sous pression accessible par un ou par deux côtés opposés.

4. Procédé suivant l'une quelconque des revendications 1 à 3, **caractérisé par le fait que** le corps creux (1) est délimité par une cuve de nettoyage et la surface extérieure d'un composant (22, 22a) disposé à l'intérieur de la cuve de nettoyage (1)

5. Procédé suivant l'une quelconque des revendications 1 à 4, **caractérisé par le fait que** la solution d'attaque chimique contient l'un au moins des réactifs chimiques suivants : réactifs acides, réactifs basiques, réactifs neutres, réactifs oxydants, réactifs réducteurs.

6. Procédé suivant l'une quelconque des revendications 1 à 5, **caractérisé par le fait qu'**on élève la température des réactifs chimiques jusqu'à une température permettant d'améliorer la réactivité de la solution d'attaque chimique.

7. Procédé suivant l'une quelconque des revendications 1 à 6, **caractérisé par le fait qu'**on recycle, éventuellement après régénération, la solution d'attaque chimique récupérée après sa mise en contact avec la substance radioactive.

8. Dispositif de décontamination d'une surface notamment métallique d'un composant (7, 22) utilisé dans le domaine de l'industrie nucléaire sur laquelle est fixée au moins une substance renfermant au moins un élément radioactif, par mise en contact de la substance fixée sur la surface avec une solution d'attaque chimique, à l'intérieur d'un corps creux (1, 7), comportant un réservoir de stockage (8) relié à un circuit de circulation de la solution d'attaque chimique communiquant avec l'intérieur du corps creux (1, 7), **caractérisé par le fait qu'**il comporte, au moins une rampe (3) comportant une pluralité de buses (15), montée dans une position fixe par rapport à la surface à décontaminer à l'intérieur du corps creux (1, 7) et ayant une forme adaptée à la géométrie de la surface à décontaminer, la pluralité de buses (15) étant disposée pour former une pluralité de jets (14) recouvrant totalement la surface à décontaminer, et que le circuit (4, 7, 9, 11) comporte une tuyauterie (4) d'amenée de solution d'attaque chimique sous pression à la rampe (3), à partir du réservoir de stockage (8), par l'intermédiaire d'une pompe haute pression (5) et au moins une tuyauterie(11, 9) d'évacuation de la solution d'attaque chimique après sa mise en contact avec la substance radioactive dans le réservoir de stockage (8), par l'intermédiaire d'une pompe de reprise (10).

9. Dispositif suivant la revendication 8, dans le cas où le corps creux (1) est un tronçon de canalisation ou un coude du circuit primaire d'un réacteur nucléaire à eau sous pression et la surface à décontaminer, la surface interne du tronçon de canalisation ou coude, **caractérisé par le fait qu'**il comporte une tape (2) de fermeture étanche du tronçon ou du coude de canalisation primaire à une première extrémité, sur laquelle est fixée la rampe d'aspersion (3) reliée à la tuyauterie d'alimentation (4) en solution d'attaque chimique sous pression, par un ajutage (16) traversant la tape d'obturation (2), la rampe (3) s'étendant sensiblement suivant un axe du tronçon ou du coude de canalisation primaire (1) et comportant des buses (15) dirigées vers la surface intérieure du tronçon ou du coude de canalisation (1) du circuit primaire.

10. Dispositif suivant la revendication 9, **caractérisé par le fait qu'**il comporte une seconde tape de fermeture (2') d'une seconde extrémité du tronçon ou du coude de canalisation (1) du circuit primaire.

11. Dispositif suivant la revendication 9, **caractérisé par le fait que** la rampe (3) porte, à une seconde extrémité opposée à son extrémité reliée à l'ajutage (16) traversant la première tape d'obturation (2), un dispositif d'obturation (19) comportant un obturateur gonflable (20) et un conduit (21) d'alimentation de l'obturateur gonflable en gaz sous pression, depuis l'extérieur du corps creux (1).

12. Dispositif suivant la revendication 11, **caractérisé par le fait que** la rampe (3) est constituée par deux tubes coaxiaux (3a, 3b), un tube externe (3a) portant des buses (15) de formation de jets (14) de solution d'attaque sous pression et un tube interne (3b) délimitant avec le tube externe (3a) un espace annulaire fermé à la seconde extrémité de la rampe (3) éloignée de la tape d'obturation (2) et relié à un collecteur d'alimentation en solution liquide d'attaque sous pression, et que le tube interne (3b) de la rampe (3) est saillant par rapport à la seconde extrémité fermée de l'espace annulaire périphérique de la rampe (3) pour déboucher par une extrémité ouverte adjacente au dispositif d'obturation (19).

13. Dispositif suivant la revendication 8, **caractérisé par le fait que** le corps creux (1) est une cuve de nettoyage destinée à recevoir un composant (22, 22a) dans sa partie interne, en vis-à-vis d'au moins une rampe (3) d'aspersion de jets de solution d'attaque chimique.

14. Dispositif suivant l'une quelconque des revendications 8 à 13, **caractérisé par le fait que** la pompe de reprise (10) est commandée par l'intermédiaire d'une unité de commande (10a) recevant un signal d'un manomètre (13) de mesure de la pression à l'intérieur du corps creux (1).

## Patentansprüche

1. Verfahren zur Dekontamination einer Oberfläche eines in der Nuklearindustrie verwendeten insbesondere metallischen Bauteils (7, 22), auf der sich wenigstens eine Substanz angelagert hat, die wenigstens ein radioaktives Element enthält, durch Kontaktherstellung zwischen der auf der Oberfläche angelagerten Substanz und einer chemischen Angriffslösung, im Innem eines Hohlkörpers (1, 7),
**dadurch gekennzeichnet, dass** man die chemische Angriffslösung im flüssigen Zustand mittels einer Vielzahl Druckstrahlen (14) - erzeugt durch eine Vielzahl Düsen (15) eines Spritzrohrs (3), das in Bezug auf die zu dekontaminierende Innenoberfläche des Hohlkörpers (1, 7) eine feste Position und eine an die Geometrie der zu dekontaminierenden Oberfläche angepasste Form hat -, mit der auf der zu dekontaminierenden Oberfläche angelagerten Substanz so in Kontakt bringt, dass die Strahlen (14) die zu dekontaminierende Oberfläche total abdecken und die Ablösung der radioaktiven Substanz von der zu dekontaminierenden Oberfläche bewirken, durch mechanischen Strahlungseffekt und durch chemischen Angriffseffekt, wobei man die flüssige chemische Angriffslösung permanent erneuert, und man die chemische Lösung nach ihrem Kontakt mit der radioaktiven Substanz auf der zu dekontaminierenden Oberfläche sowie die radioaktive Substanz in wenigstens einer der folgenden Formen auf die Außenseite des Hohlkörpers entleert: als in der chemischen Angriffslösung gelöste Phase, als der metallischen Oberfläche entrissene Teilchen.

2. Verfahren nach Anspruch 1, **dadurch gekennzeichnet, dass** die zu dekontaminierende Oberfläche eine Innenfläche des den Hohlkörper (7) bildenden Bauteils (7) ist, die Druckstrahlen konstant die Gesamtheit der Innenoberfläche des zu kontaminierenden Hohlkörpers (7) abdecken, mit eventuell einer Überdeckung zwischen den Strahlen (14).

3. Verfahren nach Anspruch 2, **dadurch gekennzeichnet, dass** die zu dekontaminierende Fläche die Innenoberfläche eines Leitungsteilstücks (7) oder eines Krümmers eines Primärkreislaufs eines Druckwasserreaktors ist und von einer Seite oder von zwei entgegengesetzten Seiten zugänglich ist.

4. Verfahren nach einem der Ansprüche 1 bis 3, **dadurch gekennzeichnet, dass** der Hohlkörper (1) begrenzt wird durch eine Reinigungswanne und die Außenoberfläche eines im Innern der Reinigungswanne (1) angeordneten Bauteils (22, 22a).

5. Verfahren nach einem der Ansprüche 1 bis 4, **dadurch gekennzeichnet, dass** die chemische Angriffslösung wenigstens eines der folgenden chemischen Reagenzien enthält: saure Reagenzien, basische Reagenzien, neutrale Reagenzien, oxidierende Reagenzien, reduzierende Reagenzien.

6. Verfahren nach einem der Ansprüche 1 bis 5, **dadurch gekennzeichnet, dass** man die Temperatur der chemischen Reagenzien bis auf eine Temperatur erhöht, die ermöglicht, die Reaktivität der chemischen Angriffslösung zu verbessern.

7. Verfahren nach einem der Ansprüche 1 bis 6, **dadurch gekennzeichnet, dass** man die nach Herstellung ihres Kontakts mit der radioaktiven Substanz zurückgewonnene chemische Angriffslösung- eventuell nach einer Regenerierung - recycelt.

8. Vorrichtung zur Dekontamination einer insbesondere metallischen Oberfläche eines in der Nuklearindustrie verwendeten Bauteils (7, 22), auf der sich wenigstens eine Substanz angelagert hat, die wenigstens ein radioaktives Element enthält, durch Kontaktherstellung zwischen der auf der Oberfläche angelagerten Substanz und einer chemischen Angriffslösung, im Innem eines Hohlkörpers (1, 7), einen Speichertank (8) umfassend, verbunden mit einem mit der Innenseite des Hohlkörpers (1, 7) verbundenen Zirkulationskreislauf der chemischen Angriffslösung, **dadurch gekennzeichnet, dass** sie wenigstens ein Spritzrohr (3) mit einer Vielzahl Düsen (15) umfasst, das in Bezug auf die zu dekontaminierende Oberfläche im Innem des Hohlkörpers (1, 7) in eine feste Position montiert ist und eine an die Geometrie der zu dekontaminierenden Oberfläche angepasste Form hat, wobei die Vielzahl Düsen (15) so angeordnet sind, dass sie eine Vielzahl Strahlen (14) bilden, welche die zu dekontaminierende Oberfläche total abdecken, und dass der Kreislauf (4, 7, 9, 11) eine Zuführungsleitung (4) der chemischen Angriffslösung unter Druck zum Spritzrohr (3) umfasst, vom Speichertank (8), mittels einer Hochdruckpumpe (5) und wenigstens einer Entleerungsleitung (11, 9) der chemischen Angriffslösung nach Herstellung ihres Kontakts mit der radioaktiven Substanz, in den Speichertank (8), mittels einer Beschleunigungspumpe (10).

9. Vorrichtung nach Anspruch 8 in dem Fall, wo der Hohlkörper (1) ein Leitungsteilstück oder ein Krümmer des Primärkreislaufs eines Druckwasserreaktors und die zu dekontaminierende Fläche die Innenoberfläche des Leitungsteilstücks oder Krümmers ist, **dadurch gekennzeichnet, dass** sie eine Verschlusseinrichtung (2) zum dichten Verschließen des Primärkreislauf-Teilstücks oder -krümmers an einem ersten Ende umfasst, in der das Spritzrohr (3) befestigt ist, das mit der Versorgungsleitung mit chemischer Angriffslösung unter Druck (4) mittels eines Stutzens (16) verbunden ist, der die Verschlusseinrichtung (2) durchquert, wobei das Spritzrohr (3) sich im Wesentlichen gemäß der Achse des Primärkreislaufteilstücks oder -krümmers (1) erstreckt und Düsen (15) umfasst, die auf die Innenoberfläche des Primärkreislauf-Leitungsteilstücks oder -krümmers (1) gerichtet sind.

10. Vorrichtung nach Anspruch 9, **dadurch gekennzeichnet, dass** sie eine zweite Verschlusseinrichtung (2') zum dichten Verschließen eines zweiten Endes des Primärkreislauf-Leitungsteilstücks oder -krümmers (1) umfasst.

11. Vorrichtung nach Anspruch 9, **dadurch gekennzeichnet, dass** das Spritzrohr (3) an einem zweiten Ende, das seinem mit dem die erste Verschlusseinrichtung (2) durchquerenden Stutzen (16) verbundenen Ende entgegengesetzt ist, eine Verschlussvorrichtung (19) umfasst, mit einem aufblasbaren Stopfen (20) und einer Leitung (21) zur Versorgung des aufblasbaren Stopfens mit Druckgas von außerhalb des Hohlkörpers (1).

12. Vorrichtung nach Anspruch 11, **dadurch gekennzeichnet, dass** das Spritzrohr (3) durch zwei koaxiale Rohre (3a, 3b) gebildet wird, wobei ein Außenrohr (3a) Düsen (15) zur Erzeugung der Angriffslösungs-Druckstrahlen (14) trägt, und ein Innenrohr (3b), das zusammen mit dem Außenrohr (3a) einen ringförmigen Raum abgrenzt, der an dem zweiten, von der Verschlusseinrichtung (2) entfernten Ende des Spritzrohrs (3) geschlossen ist, und das mit einem Sammler von flüssiger Angriffslösung unter Druck verbunden ist, und dass das Innenrohr (3b) des Spritzrohrs (3) aus dem zweiten geschlossenen Ende des peripheren ringförmigen Raums des Spritzrohrs (3) herausragt, um durch ein an die Verschlussvorrichtung (19) angrenzendes offenes Ende zu münden.

13. Vorrichtung nach Anspruch 8, **dadurch gekennzeichnet, dass** der Hohlkörper (1) eine Reinigungswanne ist, dazu bestimmt, in ihrem Innenraum ein Bauteil (22, 22a) aufzunehmen, gegenüber wenigstens einem Angriffslösungsstrahlen-Spritzrohr (3).

14. Vorrichtung nach einem der Ansprüche 8 bis 13, **dadurch gekennzeichnet, dass** die Beschleunigungspumpe (10) durch eine Steuereinheit (10a) gesteuert wird, die ein Signal erhält von einem den Druck im Innem des Hohlkörpers (1) messenden Manometer (13).

## Claims

1. Method of decontaminating a surface, in particular a metal surface, of a component (7, 22) that is used in the nuclear industry field and to which is attached at least one substance containing at least one radioactive element, by bringing the substance attached to the surface into contact with a chemical etching solution inside a hollow body (1, 7), **characterised in that** the chemical etching solution in the liquid state is brought into contact with the substance attached to the surface to be decontaminated in the form of a plurality of pressurised jets (14) produced by a plurality of nozzles (15) fastened to at least one manifold (3) mounted inside the hollow body (1, 7) in a fixed position relative to the surface to be decontaminated and having a shape adapted to the geometry of the surface to be decontaminated so that the jets (14) completely cover the surface to be decontaminated and detach the radioactive substance from the surface to be decontaminated by a mechanical jet effect and by a chemical etching effect, with continuous renewal of the liquid chemical etching solution in contact with the surface to be decontaminated, and **in that** the chemical solution is evacuated to the exterior of the hollow body after it is brought into contact with the radioactive substance and **in that** the radioactive substance is in at least one of the following forms: a phase dissolved in the chemical etching solution, particles detached from the metal surface.

2. Method according to claim 1, **characterised in that** the surface to be decontaminated is an internal surface of the component (7) constituting the hollow body (7), the pressurised jets constantly covering the whole of the inside surface of the hollow body (7) to be decontaminated, possibly with the jets (14) overlapping.

3. Method according to claim 2, **characterised in that** the surface to be decontaminated is the inside surface of a section of or a bend in a pipe (7) of the primary circuit of a pressurised water nuclear reactor accessible from one end or from both opposite ends.

4. Method according to any one of claims 1 to 3, **characterised in that** the hollow body (1) is delimited by a cleaning tank and the outside surface of a component (22, 22a) inside the cleaning tank (1).

5. Method according to any one of claims 1 to 4, **characterised in that** the chemical etching solution contains at least one of the following chemical reagents: acid reagents, basic reagents, neutral reagents, oxidising reagents, reducing reagents.

6. Method according to any one of claims 1 to 5, **characterised in that** the temperature of the chemical reagents is raised to a temperature that enhances the reactivity of the chemical etching solution.

7. Method according to any one of claims 1 to 6, **characterised in that** the chemical etching solution recovered after it is brought into contact with the radioactive substance is recycled, possibly after regeneration.

8. Device for decontaminating a surface, in particular a metal surface, of a component (7, 22) that is used in the nuclear industry field and to which is attached at least one substance containing at least one radioactive element, by bringing the substance attached to the surface into contact with a chemical etching solution inside a hollow body (1, 7), including a storage tank (8) connected to a circuit for circulating the chemical etching solution communicating with the interior of the hollow body (1, 7), **characterised in that** it includes at least one manifold (3) including a plurality of nozzles (15) mounted inside the hollow body (1, 7) in a fixed position relative to the surface to be decontaminated and having a shape adapted to the geometry of the surface to be decontaminated, the plurality of nozzles (15) being disposed to form a plurality of jets (14) completely covering the surface to be decontaminated, and **in that** the circuit (4, 7, 9, 11) includes a pipe (4) for feeding pressurised chemical etching solution to the manifold (3) from the storage tank (8) via a high-pressure pump (5) and at least one pipe (11, 9) for evacuating the chemical etching solution into the storage tank (8) via a pump (10) after it is brought into contact with the radioactive substance.

9. Device according to claim 8, wherein the hollow body (1) is a section of or a bend in a pipe of the primary circuit of a pressurised water nuclear reactor and the surface to be decontaminated is the inside surface of the pipe section or bend, **characterised in that** it includes a plug (2) for closing and sealing the primary circuit pipe section or bend at a first end to which is fixed the sprayer manifold (3) connected to the pressurised chemical etching solution feed pipe (4) via a nozzle (16) passing through the closure plug (2), the manifold (3) extending substantially along an axis of the section of or bend in the primary circuit pipe (1) and including nozzles (15) directed towards the inside surface of the section of or bend in the primary circuit pipe (1).

10. Device according to claim 9, **characterised in that** it includes a second plug (2') for closing a second end of the section of or bend in the primary circuit pipe (1).

11. Device according to claim 9, **characterised in that** the manifold (3) carries at a second end opposite its end connected to the nozzle (16) passing through the first closure plug (2) a closure device (19) including an inflatable closure member (20) and a pipe (21) for feeding the inflatable closure member with pressurised gas from outside the hollow body (1).

12. Device according to claim 11, **characterised in that** the manifold (3) consists of two coaxial tubes (3a, 3b), an external tube (3a) carrying nozzles (15) for forming pressurised jets of etching solution (14) and an internal tube (3b) delimiting with the external tube (3a) an annular space closed at the second end of the manifold (3) remote from the closure plug (2) and connected to a pressurised etching liquid solution feed manifold, and **in that** the internal tube (3b) of the manifold (3) projects relative to the closed second end of the peripheral annular space of the manifold (3) to discharge through an open end adjacent the closure device (19).

13. Device according to claim 8, **characterised in that** the hollow body (1) is a cleaning tank adapted to receive a component (22, 22a) in its internal part facing at least one chemical etching solution jet sprayer manifold (3).

14. Device according to any one of claims 8 to 13, **characterised in that** the pump (10) is controlled by a control unit (10a) receiving a signal from a pressure gauge (13) for measuring the pressure inside the hollow body (1).
